# EUROPEAN PATENT SPECIFICATION

(11) **EP 1 870 222 B1**
(45) Date of publication and mention of the grant of the patent: **02.08.2017**
(21) Application number: 06729112.0
(22) Date of filing: 15.03.2006
(51) Int. Cl.: B29C 47/92, C08J 9/12, C08L 101/16, B29K 67/00, B29K 105/04

(54) **EXTRUDED POLYHYDROXYALKANOATE RESIN FOAM**
EXTRUDIERTER POLYHYDROXYALKANOATHARZSCHAUM
MOUSSE DE RÉSINE DE POLYHYDROXYALCANOATE EXTRUDÉE

(30) Priority: 28.03.2005 JP 2005090862
(43) Date of publication of application: 26.12.2007
(73) Proprietor: Kaneka Corporation, Osaka (JP); Meredian, Inc., Bainbridge, GA 39817 (US)
(72) Inventor: HIROSE, Fuminobu c/o Kaneka Corporation Osaka Plant, Osaka 566-0072 (JP); SENDA, Kenichi c/o Kaneka Corporation Osaka Plant, Osaka 566-0072 (JP); MIYAGAWA, Toshio c/o Kaneka Corporation Osaka Plant, Osaka 566-0072 (JP)
(74) Representative: Vossius & Partner Patentanwälte Rechtsanwälte mbB
(86) International application number: PCT/JP2006/305091
(87) International publication number: WO 2006/103926

(56) References cited:
- JP-A- 06 156 524
- JP-A- 2003 327 737
- JP-A- 2003 327 737
- JP-A- 2004 075 122
- JP-A- 2004 292 499
- US-A- 4 324 493

## Description

### Technical Field

The present invention relates to a biodegradable polyhydroxyalkanoate resin extruded foam of vegetable origin.

### Background Art

Recently, under current circumstances in which environmental issues caused by waste plastics have been focused, biodegradable plastics which are degraded into water and carbon dioxide by the action of a microorganism have drawn attention. In general, biodegradable plastics are generally classified into three types of: (1) microorganic product-based aliphatic polyesters such as polyhydroxyalkanoate (particularly, poly(3-hydroxyalkanoate)); (2) chemically synthesized product-based aliphatic polyesters such as polylactic acid and polycaprolactone; and (3) naturally occurring polymers such as starch and cellulose acetate. Many of the chemically synthesized aliphatic polyesters are not readily degraded in water because they are not anaerobically degraded. Furthermore, polylactic acid and polycaprolactone are inferior in heat resistance. In addition, starch that is a naturally occurring polymer is nonthermoplastic and brittle, and is inferior in water resistance.

In contrast, polyhydroxyalkanoate has excellent features such as: being excellent in degradability under any of the aerobic and anaerobic conditions; not generating toxic gas in incineration; being excellent in water resistance and anti-water vapor permeability; capable of having a high molecular weight even without a crosslinking treatment or the like; being a plastic produced by a microorganism that assimilates a plant; not increasing carbon dioxide on the earth (being carbon neutral). Accordingly, owing to such excellent environmental compatibility, it is desired that polyhydroxyalkanoates are used as packaging materials, materials for tableware, construction materials, civil engineering materials, agricultural materials, horticultural materials, automobile interior materials, materials for adsorption, carrier and filtration, and the like.

Plastics have been used in sheets, films, fibers, injection-molded products, foams and the like, however, among these, foamed plastics which have been used for packaging containers, shock absorbers, cushioning materials and the like in large quantities, are bulky and therefore waste problems, in particular,have been desired to be dissolved. Therefore, researches on foamed plastics which exhibit biodegradability have been extensively conducted. Thus far, extruded foams and in-mold molded foams of aliphatic polyester-based resins, mixed resins of starch and a plastic and the like have been studied.

Patent Document 1 discloses an extruded foam of a polymer obtained using a biodegradable aliphatic polyester resin yielded from a raw material of petroleum origin, through allowing for a diisocyanate reaction to increase the molecular weight for improving the foaming property. Patent Documents 2 to 4 disclose an extruded foam of a polylactic acid-based resin characterized by having a certain melt viscosity through adding thickeners or the like. Patent Documents 5 to 10 disclose an extruded foam obtained from a polylactic acid-based resin or an aliphatic-aromatic polyester-based resin having a viscosity appropriately adjusted by selecting the type of the foaming agent.

Polyhydroxyalkanoate resin extruded foams of plant material origin having the characteristic as described above have been also studied. Patent Document 11 describes production of an extruded foam using a polyhydroxyalkanoate resin, and a nonhalogen-based foaming agent at a certain melt viscosity. Patent Document 11 discloses that a foam having an expansion ratio of eight times or less can be obtained using poly(3-hydroxybutyrate-co-3-hydroxyhexanoate) as polyhydroxyalkanoate, and using carbon dioxide gas, dimethyl ether or hydrocarbon as a foaming agent. However, foams having an expansion ratio exceeding eight times are not disclosed.

Furthermore, Patent Document 11 discloses a foam having a high close-cell rate, for example, 51%, with the lowest close-cell rate being 29%. Depending on the application of the foam, extruded foams having high open cell rate would be desired. For example, loose shock absorbers which can have any freely altered shape can be obtained by filling the extruded foam having a high open cell rate, which had been cut to have a predetermined length, into a pouch with or without air permeability (preferably, biodegradable bag). The loose shock absorbers can achieve an excellent performance as cushioning materials, shock absorbers which can be inserted into gaps by freely changing the shape, sound absorptive materials, and the like. In addition, the extruded foams having a high open cell rate can be used as drug sustained release control particles by mixing with a sustained release drug.
Patent Document 1: Japanese Unexamined Patent Application Publication No. 10-152572;
Patent Document 2: Japanese Unexamined Patent Application Publication No. 2000-7815;
Patent Document 3: Japanese Unexamined Patent Application Publication No. 2000-7816;
Patent Document 4: Japanese Unexamined Patent Application Publication No. 2003-20355;
Patent Document 5: Japanese Unexamined Patent Application Publication No. 2003-39524;
Patent Document 6: Japanese Unexamined Patent Application Publication No. 2003-103595;
Patent Document 7: Japanese Unexamined Patent Application Publication No. 2003-261704;
Patent Document 8: Japanese Unexamined Patent Application Publication No. 2003-301066;
Patent Document 9: Japanese Unexamined Patent Application Publication No. 2004-58352;
Patent Document 10: Japanese Unexamined Patent Application Publication No. 2004-307662;
Patent Document 11: Japanese Unexamined Patent Application Publication No. 2003-327737.

### Problems that the Invention is to Solve

An object of the present invention is to provide a method of producing a resin extruded foam which has a high expansion ratio and preferably a high open cell rate, and which is of vegetable origin, biodegradable and excellent in environmental compatibility.

### Means for Solving the Problems

The present inventors elaborately investigated for solving the aforementioned problems, and consequently found that a foam having a high expansion ratio can be produced by keeping the resin temperature at the extruder outlet within a predetermined range. Accordingly, the present invention was accomplished.

Specifically, aspects of the present invention are as described below.
(1) A P3HA resin extruded foam having an open cell rate of equal to or greater than 80%, which is obtainable by a method comprising: melt-kneading a polymer which is produced by a microorganism and includes one or more repeating monomer unit(s) represented by the formula (1):

   [-O-CHR-CH₂-CO-] (1)

   wherein R is an alkyl group represented by CₙH2ₙ₊₁, and n is an integer of .from 1 to 15 (hereinafter, this polymer may be referred to as poly(3-hydroxyalkanoate) or P3HA), and a foaming agent to form a mixture; and extruding the mixture through a molding die in a low pressure region, wherein a resin temperature To (temperature of the resin measured at the extruder discharge outlet with a thermocouple) in extruding the mixture of P3HA and the foaming agent from the extruder falls within the range represented by the formula (2):

   Tc - 20 ≤ To (°C) ≤ Tc + 20 (2)

   wherein Tc = (Tg + Tm)/2; Tg represents a glass transition temperature derived by differential scanning calorimetry of P3HA; and Tm represents a melting point (Tm) derived by differential scanning calorimetry of P3HA.
(2) The P3HA resin extruded foam according to (1) wherein P3HA is poly(3-hydroxybutyrate-co-3-hydroxyhexanoate).
(3) The P3HA resin extruded foam according to (2) wherein P3HA is poly(3-hydroxybutyrate-co-3-hydroxyhexanoate), and the polymer includes the 3-hydroxyhexanoate component in an amount of 1% by mole or more and 20% by mole or less.
(4) The P3HA resin extruded foam according to any one of (1) to (3) wherein the foaming agent is one or more selected from the group consisting of dimethyl ether, diethyl ether and methyl ethyl ether.
(5) The P3HA resin extruded foam according to any one of (1) to (3) wherein the foaming agent is dimethyl ether.
(6) The P3HA resin extruded foam according to any one of (1) to (5) wherein the expansion ratio is greater than 8 times.

### Effect of the Invention

According to the method of production of the present invention, a P3HA resin extruded foam can be obtained with a high expansion ratio exceeding 8 times, and with a high open cell rate. When extrusion foaming is conducted at a temperature beyond the temperature range of the present invention, molded products are hardly obtained with high expansion ratio because the melted P3HA foam is contracted before hardening due to low crystallization velocity of P3HA. When a resin having a melting point is extruded and foamed, the processing is generally carried out at a temperature not lower than the melting point of the resin. Hence, the processing at a low temperature as in the present invention has not been normally carried out.

Moreover, because P3HA is used as the resin, a resin extruded foam can be obtained which is excellent in heat resistance and water resistance, and is of vegetable origin and also excellent in environmental compatibility. Additionally, foams which return to carbon recycling system on the earth are obtained through degradation by the action of a microorganism or the like under any of aerobic and anaerobic conditions after the foams are disposed.

### Best Mode for Carrying Out the Invention

Hereinafter, the present invention will be explained in detail. Poly(3-hydroxyalkanoate) (P3HA) of the present invention may be a homopolymer including one kind of unit represented by the formula (1):

[-O-CHR-CH₂-CO-] (1)

wherein R is an alkyl group represented by CₙH2ₙ₊₁, and n is an integer of from 1 to 15, or a copolymer including two or more kinds of units.

As P3HA according to the present invention, a homopolymer of 3-hydroxyalkanoate; a copolymer constituted with a combination of two or more monomer units, i.e., a di-copolymer, a tri-copolymer, a tetra-copolymer or the like; or a blend including two or more of these polymers may be exemplified. Among them, the homopolymer of 3-hydroxybutyrate in which n is 1, 3-hydroxyvalylate in which n is 2, 3-hydroxyhexanoate in which n is 3, 3-hydroxyoctanoate in which n is 5, or 3-hydroxyoctadecanoate in which n is 15, or a copolymer such as a di-copolymer or a tri-copolymer including a combination of two or more of these 3-hydroxyalkanoate units, and a blend of the same can be preferably used. Furthermore, preferred is poly(3-hydroxybutyrate-co-3-hydroxyhexanoate) which is a copolymer of 3-hydroxybutyrate in which n is 1 and 3-hydroxyhexanoate in which n is 3. In this copolymer, it is particularly preferred that the 3-hydroxyhexanoate unit is included in an amount of 1% by mole or more and 20% by mole or less. When the 3-hydroxyhexanoate is included in the above range, processing at a low temperature is permitted, therefore, lowering of the molecular weight due to thermal degradation in the thermal processing is likely to be suppressed. P3HA of the present invention may have a unit other than the monomer unit represented by the formula (1), but a polymer not having the other monomer unit may be used in general.

As the P3HA of the present invention, one produced by a microorganism may be used. For example, the poly(3-hydroxybutyrate-co-3-hydroxyhexanoate) can be obtained using as a microorganism Alcaligenes eutrophus AC32 produced by introducing a PHA synthetic enzyme gene, which is derived from Aeromonas caviae, into Alcaligenes eutrophus, according to the method disclosed in J. Bacteriol., 179, 4821 (1997) or the like through adjusting the raw material and culture conditions appropriately.

The lower limit of the weight average molecular weight (Mw) of the aforementioned P3HA is preferably 50,000. When the weight average molecular weight is equal to or greater than 50,000, the melt viscosity required in foaming can be secured, and thus stable production of the foam is likely to be achieved. The weight average molecular weight referred to herein means a weight average molecular weight (Mw) derived by measuring the molecular weight converted based on polystyrene with gel permeation chromatography (GPC) using a chloroform eluent.

In an aspect of the present invention, crystallization is accelerated by keeping the resin temperature in extrusion foaming to fall within a predetermined range. In order to be extruded and foamed smoothy in this temperature range, it is preferred to use a foaming agent which can plasticize P3HA strongly. Moreover, it is preferred to use a foaming agent which exhibits environmental compatibility and solubility with polyhydroxyalkanoate, and exhibits a gaseous state at a room temperature or a temperature of the molding die during the extrusion, as the foaming agent. Examples of such a foaming agent include inorganic gases such as carbon dioxide, nitrogen and air, aliphatic saturated hydrocarbons, as well as other foaming agents not including halogen, and the like. These may be used alone, or two or more of them may be used in combination.

In general, although the inorganic gases have inferior plasticizing capacity of P3HA, plasticization of the resin is enabled even in the case of use of, for example, carbon dioxide, as long as an extruder which can be controlled under a high pressure is employed. In addition, the inorganic gas also serves as a cell size regulator.

Examples of the aliphatic saturated hydrocarbon include saturated hydrocarbons having 3 or more and 4 or less carbon atoms such as propane, n-butane and isobutane, and saturated hydrocarbons having 5 carbon atoms such as n-pentane, isopentane and neopentane, and the like.

Examples of the other foaming agent not including halogen include ethers such as dimethyl ether, diethyl ether, methyl ethyl ether, n-butyl ether, diisopropyl ether, furan, furfural, 2-methylfuran, tetrahydrofuran and tetrahydropyran, ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone and ethyl n-butyl ketone, alcohols such as methanol, ethanol, propyl alcohol, i-propyl alcohol, butyl alcohol, i-butyl alcohol and t-butyl alcohol, carboxylate esters such as methyl formate, ethyl formate, propyl formate, butyl formate, amyl formate, methyl propionate and ethyl propionate, and the like. Chemical foaming agents such as azo compounds can be also used as a foaming aid or cell size regulator.

Among these foaming agents, a foaming agent that has high affinity to P3HA resins, and high plasticizing ability is preferably used, and in particular, an ether is preferably used in light of the foaming property. Still further, dimethyl ether, diethyl ether and methyl ethyl ether are preferred, and dimethyl ether is particularly preferred. Also taking into account of incineration of the waste foams, dimethyl ether is a preferable foaming agent because it is a substance with small environmental burden, never generating sulfuroxides and soot when burned.

Conventionally, foaming at a low resin temperature was difficult, however, ethers have potent plasticizing ability and foaming power on the P3HA resin, use of the ethers enables the extruded foams under conditions represented by the formula (2) to be easily produced. When the ether-based foaming agent is used, the resin temperature at which the extruded foam is stably produced can be lowered by several ten degrees Celsius, whereby foaming can be performed at around the crystallization temperature. When the foaming is carried out at a low temperature around the crystallization temperature, P3HA is more quickly hardened compared with the case in which the foaming is performed at higher temperatures, and a foam having a higher expansion ratio is likely to be obtained without contraction through fixation of the cell membrane after the foaming.

The amount of the added foaming agent may vary depending on the plasticizing ability of the used foaming agent, but is preferably 1 part by weight or more and 100 parts by weight or less, in general, based on 100 parts by weight of P3HA. Also, in the case of use of dimethyl ether, for example, the amount is preferably 10 parts by weight or more and 30 parts by weight or less based on 100 parts by weight of P3HA. When the amount is less than 10 parts by weight, P3HA cannot be plasticized enough, which may lead to failure in making To fall within the range represented by the formula (2). To the contrary, use in the amount exceeding 30 parts by weight is not economical due to the excessive amount of the gas.

To P3HA in the present invention may be added various additives in the range not to hamper required performances of the resulting extruded foams to meet the needs. Exemplary additives may include antioxidants, ultraviolet ray absorbing agents, colorants such as dyes and pigments, plasticizers, lubricants, crystallization nucleating agents, inorganic fillers, and the like. Among these, the additives which exhibit biodegradability are preferred, in particular. Examples of the additive include inorganic compounds such as silica, talc, calcium silicate, wollastonite, kaolin, clay, mica, zinc oxide, titanium oxide and silicon dioxide, fatty acid metal salts such as sodium stearate, magnesium stearate, calcium stearate and barium stearate, liquid paraffin, olefin-based wax, fatty amide-based compounds and the like, but not limited thereto.

Moreover, when regulation of the cell diameter of the foam is needed, a cell regulator may be added. Examples of the cell regulator include inorganic nucleating agents such as talc, silica, calcium silicate, calcium carbonate, aluminum oxide, titanium oxide, diatomaceous earth, clay, sodium bicarbonate, alumina, barium sulfate, bentonite, and the like. The amount of the used cell regulator may be generally 0.005 to 10 parts by weight based on 100 parts by weight of P3HA.

The P3HA extruded foam of the present invention is produced by: heating the P3HA resin in an extruder to melt (the resin temperature in this step being referred to as melting temperature (T1)); injecting the foaming agent into the melted resin; kneading the melted resin and the foaming agent; cooling them to the resin temperature To giving a highly pressurized mixture; then passing the mixture through a die in the low pressure area to perfect extrusion foaming. The melting temperature (T1) in heating the P3HA to melt is, on the basis of the melting point (Tm) derived by differential scanning calorimetry of P3HA, preferably equal to or lower than Tm + 40°C, more preferably equal to or lower than Tm + 20°C, and particularly preferably equal to or lower than Tm + 10°C. When the melting temperature (T1) is higher than the melting point +40°C, decrease in molecular weight may be promoted due to thermal degradation even though the melting time is short, whereby attaining a viscosity suited for extrusion foaming is likely to be difficult. The resin temperature To at which P3HA is extruded with the foaming agent from the extruder affects the expansion ratio, and the melting temperature (T1) also affects the expansion ratio. In other words, when the resin temperature To is the same, an extruded foam having a high expansion ratio is readily obtained, through improved solidification by crystallization in the foam extrusion foaming due to the effect of P3HA to promote self-crystallization, as the melt temperature (T1) is lower, and is more approximate to the melting point (Tm) or below this point.

Since the melting time may vary depending on the extrusion quantity per unit time, the melting means and the like, it cannot be particularly determined. However, it is preferred to select the melting time from the range of time to allow the P3HA resin, the foaming agent, and the additives if necessary to be uniformly dispersed and mixed, and to avoid significant lowering of the molecular weight resulting from the thermal degradation. In addition, the melting means is not particularly limited, and any melt-kneading apparatus commonly used in extrusion foaming may be appropriately selected such as e.g., a screw extruder.

The injection of the foaming agent of the present invention into the extruder can be carried out by a known method. The pressure in injection of the foaming agent is not particularly limited, which is acceptable when it is higher than the inner pressure of the extruder for perfecting the injection into the extruder.

It is necessary that the resin temperature To (temperature of the resin measured at the extruder discharge outlet with a thermocouple) in extruding the mixture of P3HA and the foaming agent of the present invention from the extruder falls within the range represented by the formula (2). Moreover, it is preferred that the resin temperature (To) be lower than the melting point.

The temperature and the pressure of the atmosphere to which the P3HA foam is extruded are not particularly limited as long as they are equal to or lower than the melting temperature (T1), and lower than the inner pressure of the extruder, respectively. The temperature and the pressure of the atmosphere may be selected appropriately such that the resin temperature To falls within the range represented by the formula (2). For example, the atmosphere of ordinary temperature and atmospheric pressure can be selected. As needed, any of the gas phases and liquid phases in which the temperature is adjusted to be higher or lower than the ordinary temperature, and the pressure is adjusted to a reduced pressure lower than the atmospheric pressure or a pressure slightly higher than the atmospheric pressure can be selected.

The P3HA resin extruded foam produced in such a manner can have an expansion ratio exceeding eight times. Moreover, the expansion ratio of equal to or greater than twenty times is also available. In addition, the foam having an open cell rate of equal to or greater than 80%, still further, equal to or greater than 90% can be produced. Such an expansion ratio is preferred in terms of the lightweight properties, and economical aspects. Furthermore, such an open cell rate is preferred in light of the cushioning properties, and versatility of the shape.
In the P3HA resin extruded foam according to the present invention, the open cell rate is equal to or greater than 80%.

### Examples

The present invention will be explained in more detail by way of illustrative Examples below, but the present invention is not anyhow limited to these Examples. Herein, the following abbreviations are used.
PHBH: poly(3-hydroxybutyrate-co-3-hydroxyhexanoate)
HH rate: molar fraction (mol%) of hydroxyhexanoate in PHBH

In Examples, unless otherwise stated, "part" is on the weight basis. Physical properties of the P3HA resin foam in each Example were determined as described below.

### <Melting Point Tm, Glass Transition Temperature Tg of P3HA Resin>

The differential scanning calorimetry was carried out according to JIS K-7121. The P3HA resin of about 5 mg used in extrusion foaming was precisely weighed, and the temperature was elevated from -20°C to 200°C at a rate of temperature rise of 10°C/min with a differential scanning calorimeter (manufactured by Seiko Electronics Co., Ltd., SSC5200) to obtain a DSC curve. The temperature at the top of the highest peak having the maximum absolute value of the endothermic curve in the DSC curve is defined as the melting point Tm. In the DSC curve, at the part that is shifted stepwisely in the base line due to the glass transition, the two base lines before and after the change are extended. From these two lines, a center line which has the same distance on both sides thereof in the ordinate axis direction. The temperature at the point where this center line intersects with the curve in the part that was shifted stepwisely due to the glass transition in the DSC curve is defined as Tg.

### <Expansion Ratio of P3HA Resin Extruded Foam>

Into a graduated cylinder charged with ethanol at 23°C was submerged the extruded foam (weight: W (g)), which had been left to stand under a condition with relative humidity of 50%, at 23°C and 1 atm for 7 days, using a wire mesh or the like. The volume V (cm³) of the foam read from the elevated ethanol level is measured. The expansion ratio is determined with the volume V and the density ρ (g/cm³) of the P3HA resin, according to the expansion ratio = V/(W/ρ).

### <Open Cell Rate of P3HA Resin Extruded Foam>

The open cell rate was measured with Multipicnometer (manufactured by Beckmann Japan Co., Ltd.), according to ASTM D-2856.

### <Weight Average Molecular Weight (Mw)>

The weight average molecular weight (Mw) converted based on polystyrene was determined by measurement with GPC. The GPC apparatus employed was a CCP&8020 system (manufactured by Tosoh Corporation), with the column GPC K-805L (manufactured by Showa Denko K. K.) at a column temperature of 40°C. 200 µl of a solution of 20 mg of polyhydroxyalkanoate in 10 ml of chloroform was injected to determine Mw.

### <Biodegradability of P3HA Resin Extruded Foam>

A piece in size of 50 mm x 50 mm x 5 mm was excised from the P3HA resin extruded foam. Six months after burying the piece 10 cm under the ground, change in the shape was observed to evaluate the degradability according to the following standards:
A: substantial part degraded to the extent that the original shape can be hardly observed.
C: almost no change in the shape found, showing no degradation.

### (Example 1)

PHBH (HH rate: 10% by mole, Mw = 530,000) was produced using as a microorganism Alcaligenes eutrophus AC32 (J. Bacteriol., 179, 4821 (1997)), which had been prepared by introducing a PHA synthase gene derived from Aeromonas caviae into Alcaligenes eutrophus, through appropriately adjusting the raw material and culture conditions. After melt-kneading the PHBH in an φ35 mm single screw extruder at a cylinder temperature of 135°C, it was extruded from a small die opening of 3 mm φ attached to the extruder tip. Thus extruded strand was cut by a pelletizer to produce a PHBH pellet A (Mw = 450,000, Tg = 1°C, Tm = 135°C, Tc = 68°C) having a particle weight of 5 mg. The pellet A was fed to a two-stage extruder in which one having φ65 mm was connected to one having φ90 mm in series at a rate of about 40 kg/hr. The resin mixture fed to the φ65 mm extruder was heated to 135°C (T1), and melt-kneaded, Thereto was added a foaming agent, and the mixture was fed to a φ90 mm extruder which had been connected to the φ65 mm extruder. The resin was cooled in the φ90 mm extruder to the resin temperature To of 80°C (To being between Tg and Tm, satisfying the relationship represented by the formula (2)). The resin was extruded through a nozzle having a rectangular cross section with a size of 1 mm in the thickness direction and 50 mm in the width direction, the nozzle attached to the tip of the extruder having a nozzle size of 90 mm to the atmosphere. Accordingly, a slab extruded foam having a thickness of about 10 mm, and a width of about 80 mm was obtained.

In this step, 15 parts of dimethyl ether based on 100 parts of the PHBH as a foaming agent was injected into the resin from around the tip of the extruder having a nozzle size of 65 mm. Thus resulting foam had an expansion ratio of 20 times, and an open cell rate of 98%. Furthermore, this resin exhibited favorable biodegradability. The results are shown in Table 1.

### (Example 2)

PHBH (HH rate: 7% by mole, Mw = 720,000) was produced using as a microorganism Alcaligenes eutrophus AC32 (J. Bacterial, 179, 4821 (1997)), which had been prepared by introducing a PHA synthase gene derived from Aeromonas caviae into Alcaligenes eutrophus, through appropriately adjusting the raw material and culture conditions. After melt-kneading the PHBH in a φ35 mm single screw extruder at a cylinder temperature of 145°C, it was extruded from a small die opening of 3 mm φ attached to the extruder tip. Thus extruded strand was cut by a pelletizer to produce a PHBH pellet B (Mw = 570,000, Tg = °C, Tm = 145°C, Tc = 73°C) having a particle weight of 5 mg. The pellet B was fed to a two-stage extruder in which one having a nozzle size of 65 mm was connected to one having a nozzle size of 90 mm in series at a rate of about 40 kg/hr The resin mixture fed to the extruder having the nozzle size of 65 mm was heated to 145°C (T1), and melt-kneaded. Thereto was added a foaming agent, and the mixture was fed to an extruder having a nozzle size of 90 mm which had been connected to the extruder having a nozzle size of 65 mm. The resin was cooled in the extruder having a nozzle size of 90 mm to the resin temperature To of 78°C (To being between Tg and Tm, satisfying the relationship represented by the formula (2)). The resin was extruded through a nozzle having a rectangular cross section of 1 mm in the thickness direction and 50 mm in the width direction, attached to the tip of the φ90 mm extruder to the atmosphere. Accordingly, a slab extruded foam having a thickness of about 12 mm, and a width of about 85 mm was obtained.

In this step, 17 parts of dimethyl ether based on 100 parts of the PHBH as a foaming agent was injected into the resin from around the tip of the extruder having a nozzle size of 65 mm. Thus resulting foam had an expansion ratio of 25 times, and an open cell rate of 99%. Furthermore, this resin exhibited favorable biodegradability. The results are shown in Table 1.

### (Example 3)

PHBH (HH rate: 12% by mole, Mw = 560,000) was produced using as a microorganism Alcaligenes eutrophus AC32 (J. Bacteriol., 179, 4821 (1997)), which had been prepared by introducing a PHA synthase gene derived from Aeromonas caviae into Alcaligenes eutrophus, through appropriately adjusting the raw material and culture conditions. After melt-kneading the PHBH in a φ35 mm single screw extruder at a cylinder temperature of 140°C, it was extruded from a small die opening of 3 mm φ attached to the extrudertip. Thus extruded strand was cut by a pelletizer to produce a PHBH pellet C (Mw = 520,000, Tg = 2°C, Tm = 142°C, Tc = 72°C) having a particle weight of 5 mg. The pellet C was fed to a two-stage extruder in which one having φ65 mm was connected to one having φ90 mm in series at a rate of about 40 kg/hr. The resin mixture fed to the φ65 mm extruder was heated to 140°C (T1), and melt-kneaded. Thereto was added a foaming agent, and the mixture was fed to a φ90 mm extruder which had been connected to the extruder having a nozzle size of 65 mm. The resin was cooled in the extruder having a nozzle size of 90 mm to the resin temperature To of 74°C (To being between Tg and Tm, satisfying the relationship represented by the formula (2)). The resin was extruded to the atmosphere through a nozzle having a rectangular cross section with a size of 1 mm in the thickness direction and 50 mm in the width direction, the nozzle being attached to the tip of the φ90 mm extruder. Accordingly, a slab extruded foam having a thickness of about 15 mm, and a width of about 90 mm was obtained.

In this step, 20 parts of dimethyl ether based on 100 parts of the PHBH as a foaming agent was injected into the resin from around the tip of the extruder having a nozzle size of 65 mm. Thus resulting foam had an expansion ratio of 33 times, and an open cell rate of 99%. Furthermore, this resin exhibited favorable biodegradability. The results are shown in Table 1.

### (Example 4) (reference)

Foaming was attempted in a similar manner to Example 3 except that 5 parts by weight of propane was used as the foaming agent. As a result, PHBH, which might have low compatibility with propane, was not plasticized to generate a gas mass, and the melt viscosity was so high even at a resin temperature To of 140°C that achievement of the extrusion was difficult, and the gas blew out. Accordingly, stable extrusion foaming could not be performed. Although stable extrusion foaming could not be performed in this experiment, it is expected that, even though propane is used as the foaming agent, an extruded foam having excellent performances can be obtained by employing an extruder which can be controlled under a high pressure and adjusting To to fall within the temperature range satisfying the relationship represented by the formula (2).

**[Table 1]**

| | | Example 1 | Example 2 | Example 3 | Example 4 |
|---|---|---|---|---|---|
| HH rate | % | 10 | 7 | 12 | 12 |
| Mw | X 10000 | 45 | 57 | 52 | 52 |
| Tm | °C | 135 | 145 | 142 | 142 |
| Tg | °C | 1 | 1 | 2 | 2 |
| Tc | °C | 68 | 73 | 72 | 72 |
| Tc +20 | °C | 88 | 93 | 92 | 92 |
| Tc -20 | °C | 48 | 53 | 52 | 52 |
| To | °C | 80 | 78 | 74 | 140 |
| Dimethyl ether | part | 15 | 17 | 20 | |
| Propane | part | | | | 5 |
| Expansion ratio | Time | 20 | 25 | 33 | - |
| Open cell rate | % | 98 | 99 | 99 | - |
| Biodegradability | | A | A | A | - |

### Industrial Applicability

As in the foregoing, according to the method of production of the present invention, a P3HA resin extruded foam having a high open cell rate can be obtained with a high expansion ratio exceeding 8 times. Furthermore, since P3HA is employed as the resin, a resin extruded foam which is excellent in heat resistance and water resistance, and which is of vegetable origin and also excellent in environmental compatibility can be obtained. Additionally, foams are obtained which return to carbon recycling system on the earth through degradation by the action of a microorganism or the like under any of aerobic and anaerobic conditions after the foam is disposed.

## Claims

1. A P3HA resin extruded foam having an open cell rate of equal to or greater than 80%, which is obtainable by a method comprising: melt-kneading a polymer which is produced by a microorganism and includes one or more repeating monomer unit(s) represented by the formula (1):
[-O-CHR-CH₂-CO-] (1)
wherein R is an alkyl group represented by CₙH2ₙ₊₁, and n is an integer of from 1 to 15 (hereinafter, this polymer may be referred to as poly(3-hydroxyalkanoate) or P3HA), and a foaming agent to form a mixture; and extruding the mixture through a molding die in a low pressure region, wherein a resin temperature To (temperature of the resin measured at the extruder discharge outlet with a thermocouple) in extruding the mixture of P3HA and the foaming agent from the extruder falls within the range represented by the formula (2):
Tc - 20 ≤ To (°C) ≤ Tc + 20 (2)
wherein Tc = (Tg + Tm)/2; Tg represents a glass transition temperature derived by differential scanning calorimetry of P3HA; and Tm represents a melting point (Tm) derived by differential scanning calorimetry of P3HA.

2. The P3HA resin extruded foam according to claim 1 wherein P3HA is poly(3-hydroxybutyrate-co-3-hydroxyhexanoate).

3. The P3HA resin extruded foam according to claim 2 wherein P3HA is poly(3-hydroxybutyrate-co-3-hydroxyhexanoate), and the polymer includes the 3-hydroxyhexanoate component in an amount of 1 % by mole or more and 20% by mole or less.

4. The P3HA resin extruded foam according to any one of claims 1 to 3 wherein the foaming agent is one or more selected from the group consisting of dimethyl ether, diethyl ether and methyl ethyl ether.

5. The P3HA resin extruded foam according to any one of claims 1 to 3 wherein the foaming agent is dimethyl ether.

6. The P3HA resin extruded foam according to any one of claims 1 to 5 wherein the expansion ratio is greater than 8 times.

## Patentansprüche

1. Ein extrudierter Schaum auf P3HA-Harz-Basis mit einem offene-Zellen-Verhältnis von 80% oder mehr, das erhältlich ist durch ein Verfahren, umfassend: Schmelzkneten eines Polymers, das durch einen Mikroorganismus hergestellt ist und das eine oder mehrere sich wiederholende Monomereinheit(en), die dargestellt sind durch Formel (1):
[-O-CHR-CH₂-CO-] (1)
enthält, wobei R eine Alkylgruppe ist, dargestellt durch CₙH₂ₙ₊₁ und n eine ganze Zahl von 1 bis 15 ist (nachstehend kann dieses Polymer als Poly(3-hydroxyalkanoat) oder P3HA bezeichnet sein) und eines Schäumungsmittels, um ein Gemisch zu bilden; und Extrudieren des Gemisches durch ein Formwerkzeug in einem Bereich von niedrigem Druck, wobei eine Harztemperatur To (Temperatur des Harzes, gemessen an der Auslassöffnung des Extruders mit einem Thermoelement) beim Extrudieren des Gemisches von P3HA und Schäumungsmittel aus von dem Extruder in einen Bereich fällt, dargestellt durch Formel (2):
Tc - 20 ≤ To (°C) ≤ Tc + 20 (2)
fällt, wobei Tc = (Tg + Tm)/2; Tg eine Glasübergangstemperatur darstellt, abgeleitet durch Differentialscanningkalorimetrie des P3HA; und Tm einen Schmelzpunkt (Tm) darstellt, abgeleitet durch Differentialscanningkalorimetrie des P3HA.

2. Der extrudierte Schaum auf P3HA-Harz-Basis gemäß Anspruch 1, wobei P3HA Poly(3-hydroxybutyrat-co-3-hydroxyhexanoat) ist.

3. Der extrudierte Schaum auf P3HA-Harz-Basis gemäß Anspruch 2, wobei P3HA Poly(3-hydroxybutyrat-co-3-hydroxyhexanoat) ist und das Polymer die 3-Hydroxyhexanoat-Komponente in einer Menge von 1 Mol-% oder mehr und 20 Mol-% oder weniger enthält.

4. Der extrudierte Schaum auf P3HA-Harz-Basis gemäß einem der Ansprüche 1 bis 3, wobei das Schäumungsmittel eines oder mehrere, ausgewählt aus der Gruppe bestehend aus Dimethylether, Diethylether und Methylethylether ist.

5. Der extrudierte Schaum auf P3HA-Harz-Basis gemäß einem der Ansprüche 1 bis 3, wobei das Schäumungsmittel Dimethylether ist.

6. Der extrudierte Schaum auf P3HA-Harz-Basis gemäß einem der Ansprüche 1 bis 5, wobei das Ausdehnungsverhältnis mehr als das 8-fache beträgt.

## Revendications

1. Mousse extrudée de résine de P3HA ayant un taux de cellule ouverte égal ou supérieur à 80 %, qui peut être obtenue par un procédé comprenant : le malaxage à l'état fondu d'un polymère qui est produit par un micro-organisme et inclut une ou plusieurs unités monomériques répétitives représentés par la formule (1) :
[-O-CHR-CH₂-CO-] (1)
dans laquelle R est un groupe alkyle représenté par CₙH2ₙ₊₁, et n est un nombre entier de 1 à 15 (ci-après, ce polymère peut être également nommé poly(3-hydroxyalcanoate) ou P3HA), et un agent moussant pour former un mélange ; et l'extrusion du mélange à travers un moule dans une région de basse pression, dans laquelle une température de résine To (température de la résine mesurée à la sortie de décharge de l'extrudeuse avec un thermocouple) pour extruder le mélange de P3HA et de l'agent moussant à partir de l'extrudeuse est comprise dans la plage représentée par la formule (2) :
Tc - 20 ≤ To (°C) ≤ Tc + 20 (2)
dans laquelle Tc = (Tg + Tm)/2 ; Tg représente une température de transition vitreuse déterminée par calorimétrie différentielle à balayage de P3HA ; et Tm représente un point de fusion (Tm) déterminé par calorimétrie différentielle à balayage de P3HA.

2. Mousse extrudée de résine de P3HA selon la revendication 1, dans laquelle P3HA est du poly(3-hydroxybutyrate-co-3-hydroxyhexanoate).

3. Mousse extrudée de résine de P3HA selon la revendication 2, dans laquelle P3HA est du poly(3-hydroxybutyrate-co-3-hydroxyhexanoate) et le polymère inclut le composant 3-hydroxyhexanoate en une quantité de 1 % en moles ou plus et de 20 % en moles ou moins.

4. Mousse extrudée de résine de P3HA selon l'une quelconque des revendications 1 à 3, dans laquelle l'agent moussant est un ou plusieurs sélectionnés dans le groupe consistant en de l'éther diméthylique, de l'éther diéthylique et de l'éther méthyléthylique.

5. Mousse extrudée de résine de P3HA selon l'une quelconque des revendications 1 à 3, dans laquelle l'agent moussant est l'éther diméthylique.

6. Mousse extrudée de résine de P3HA selon l'une quelconque des revendications 1 à 5, dans laquelle le rapport d'expansion est supérieur à 8 fois.
